# EUROPÄISCHE PATENTSCHRIFT

(11) **EP 1 419 082 B1**
(45) Veröffentlichungstag und Bekanntmachung des Hinweises auf die Patenterteilung: **25.07.2007**
(21) Anmeldenummer: 01929637.5
(22) Anmeldetag: 10.05.2001
(51) Int. Cl.: B62D 5/06, B62D 5/30

(54) **SERVOLENKUNG MIT SENSOREN FÜR DIE ERMITTLUNG DER LENKKRAFT**
POWER-ASSISTED STEERING SYSTEM WITH SENSORS FOR DETERMINING THE STEERING EFFORT
DIRECTION ASSISTEE POURVUE DE DETECTEURS DESTINES A LA DETERMINATION DE LA FORCE DE BRAQUAGE

(30) Priorität: 20.09.2000 DE 10046855
(43) Veröffentlichungstag der Anmeldung: 19.05.2004
(73) Patentinhaber: ThyssenKrupp Presta SteerTec GmbH, 40476 Düsseldorf (DE)
(72) Erfinder: BÜHLER, Holger, 73614 Schorndorf (DE); CLEPHAS, Bernd, 73730 Esslingen (DE); HORWATH, Jochen, 72669 Unterensingen (DE); MARZIAN, Christian, 73104 Börtlingen (DE); RESENFELD, Albrecht, 70329 Stuttgart (DE); SCHÖNTHALER, Jochen, 73269 Hochdorf (DE); SIKORA, Karsten, 73274 Notzingen (DE)
(74) Vertreter: LENZING GERBER
(86) Internationale Anmeldenummer: PCT/EP2001/005327
(87) Internationale Veröffentlichungsnummer: WO 2002/024508

(56) Entgegenhaltungen:
- DE-A- 19 839 951
- DE-A- 19 855 404
- DE-A- 19 855 405
- DE-C- 19 755 044

## Beschreibung

Die vorliegende Erfindung betrifft eine hydraulische Servolenkung mit den Merkmalen des Oberbegriffs des Anspruchs 1.

Eine derartige Servolenkung, die im Normalbetrieb ohne eine mechanische Kupplung zwischen der Lenkhandhabe und dem Lenkaktuator arbeitet, wird als Steer-by-wire-Lenkung (Sbw-Lenkung) bezeichnet. Bei derartigen Lenkungen ist eine sehr genaue Regelung des von der Lenkung eingestellten Radwinkels in Abhängigkeit von dem manuell eingestellten Lenkradwinkel erwünscht.

Aus der DE 19855404 A1 ist eine gattungsgemäße Servolenkung bekannt, bei der zwei Hydraulikkreise bis zum Eingang eines Wechselventils vollständig redundant ausgelegt sind. Bei dieser Servolenkung ist eine größere Anzahl von Drucksensoren zur Überwachung der Einzelkomponenten vorgesehen. Das Ausführungsbeispiel der DE 19855404 A1 weist insgesamt 12 Drucksensoren auf. Diese sind den Hydraulikleitungen zugeordnet. Zwischen dem Wechselventil und dem Servomotor wird der Druck nicht gemessen. Die Druckmesswerte sind als zusätzliche Informationen für die Lageregelung und für die Funktionsüberwachung des Servomotors nicht geeignet, da sie die Druckverhältnisse in den Arbeitsräumen nur ungenau wiedergeben.

Es ist deshalb Aufgabe der Erfindung, eine gattungsgemäße Servolenkung zu schaffen, deren Drucksensoren eine Verwendung der ermittelten Messwerte in der Regelung und Überwachung des Servomotors erlauben.

Diese Aufgabe wird von einer Servolenkung mit den Merkmalen des Anspruchs 1 gelöst.

Weil Drucksensoren derart angeordnet sind, dass sie ohne dazwischenliegende Ventile mit jeweils einem Arbeitsraum hydraulisch kommunizieren, können die absoluten Drücke und deren zeitlicher Verlauf besonders präzise erfasst werden, ohne dass Elastizitäten von Leitungen oder hydrodynamische Beeinträchtigungen durch kleine oder gar variable Querschnitte das Signal verfälschen. Insbesondere ist vorteilhaft, wenn die Drucksensoren mit dem Gehäuse verschraubt sind.

Wenn die Drucksensoren in der Weise mit dem Gehäuse verbunden sind, daß über einen in dem Gehäuse vorgesehenen Sensorkanal der Druck in wenigstens einem Kanal, insbesondere in den Hydraulikleitungen überwachbar ist, wird die Messung weiter verbessert. Der Sensorkanal kann dabei in einen Hydraulikkanal münden. Auch kann zwischen den Drucksensoren und dem jeweiligen Arbeitsraum ein in das Gehäuse integrierter Sensorkanal vorgesehen sein, der mittelbar oder unmittelbar in dem zugeordneten Arbeitsraum mündet.

Für den Betrieb der Servolenkung als Steer-by-wire-Lenkung ist vorteilhaft, wenn die Regelanordnung dazu eingerichtet ist, einen zeitlichen Verlauf des Drucks an den Drucksensoren auszuwerten und Abweichungen des Verlaufs von einem Sollverlauf als ein Fehlersignal zu werten, nach dessen Auftreten vorgesehen ist, die Wechselventilanordnung umzuschalten.

Im folgenden wird die vorliegende Erfindung anhand eines Ausführungsbeispiels beschrieben. Es zeigt:

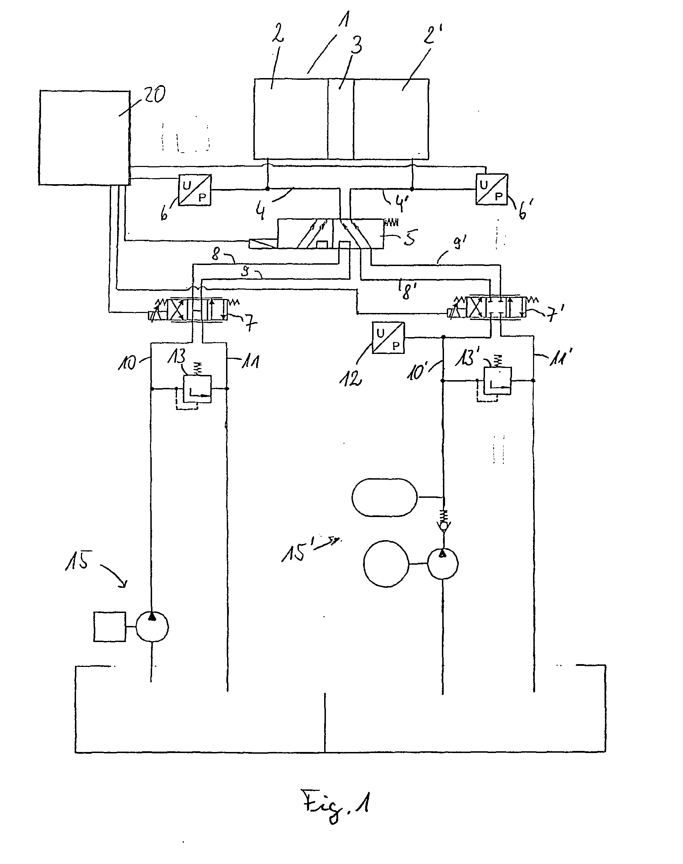

- Figur 1:: einen Hydraulikschaltplan einer erfindungsgemäßen Servolenkung.

In der Figur 1 ist ein Hydraulikschaltplan eines Ausführungsbeispiels der vorliegenden Erfindung dargestellt. Zur Betätigung der Fahrzeuglenkung ist ein hydraulischer Stellmotor 1 mit zwei Arbeitsräumen 2, 2' vorgesehen. Die Arbeitsräume 2, 2' sind von einem nur schematisch dargestellten Arbeitskolben 3 begrenzt. Die Arbeitsräume 2, 2' stehen über Hydraulikleitungen 4, 4' mit einer elektrisch betätigten Wechselventilanordnung 5 in Verbindung. Den Hydraulikleitungen 4, 4' sind Drucksensoren 6, 6' zugeordnet. Die Wechselventilanordnung 5 ist wiederum mit zwei elektrisch zu betätigenden Steuerventilanordnungen 7, 7' verbunden. Dabei sind zwischen der Wechselventilanordnung 5 und der Steuerventilanordnung 7 zwei Leitungen 8, 9 vorgesehen, die zwei weiteren Hydraulikleitungen 8', 9' zwischen der Wechselventilanordnung 5 und der Steuerventilanordnung 7 entsprechen.

Die Steuerventilanordnung 7 ist wiederum mit Hydraulikleitungen 10, 11 verbunden, die die Druckseite bzw. die Niederdruckseite eines Hydraulikpumpenanschlusses darstellen. In gleicher Weise ist die Steuerventilanordnung 7' mit Hydraulikleitungen 10', 11' verbunden. Der Hydraulikleitung 10' ist, anders als der Hydraulikleitung 10, ein Drucksensor 12 zugeordnet, mit dem der in der Hydraulikleitung 10' anstehende Hydraulikdruck überprüft werden kann.

Die Leitungen 10 und 11 bzw. 10', 11' sind über Druckbegrenzungsventile 13 bzw. 13' miteinander verbunden.

Im übrigen stehen die Leitungen 10, 11 mit an sich bekannten Komponenten eines ersten Hydraulikkreises (insgesamt mit 15 bezeichnet) in Verbindung. Die Leitungen 10', 11' stehen ebenso mit an sich bekannten Komponenten eines zweiten Hydraulikkreises (insgesamt mit 15' bezeichnet) in Verbindung.

Eine elektronische Regelanordnung 20 ist vorgesehen, um die Wechselventilanordnung 5 sowie die Steuerventilanordnungen 7 und 7' in Abhängigkeit von Eingangssignalen derart zu steuern, dass eine Druckdifferenz in den Arbeitsräumen 2 und 2' den Arbeitskolben 3 antreibt und darüber den Lenkwinkel der nicht dargestellten Lenkung des Fahrzeug in der gewünschten Weise verändert. Die primären Eingangssignale werden dabei von einem mit der Lenkhandhabe betätigten Lenkwinkel-Sollwertgeber sowie von einem mit den gelenkten Fahrzeugrädern betätigten Lenkwinkel-Istwertgeber erzeugt.

Weitere Eingangssignale werden von den unmittelbar an den Hydraulikleitungen 4 und 4' angeschlossenen Drucksensoren 6 und 6' geliefert.

Um eine möglichst genaue Abbildung des Drucks in dem jeweils zugeordneten Arbeitsraum 2, 2' zu erzielen, ist es besonders vorteilhaft, die Drucksensoren 6 und 6' fest mit dem Gehäuse des Servomotors zu verbinden. Die derzeit bevorzugte Ausführungsform sieht vor, dass die Drucksensoren 6 und 6' mit einem Schraubgewinde in das Gehäuse eingeschraubt werden, wo sie über einen gebohrten Kanal ohne eine zwischengeschaltete Schlauch- oder Rohrleitung auf kürzestem Wege mit dem anstehenden Druck in dem jeweiligen Arbeitsraum 2, 2' beaufschlagt werden.

Im Betrieb ermöglicht die Anordnung der Drucksensoren 6, 6' zwischen der Wechselventilanordnung 5 und den Arbeitsräumen 2, 2' eine unmittelbare Kontrolle, ob die von der Regelanordnung 20 an die Steuerventilen 7, 7' abgegebenen Steuersignale in entsprechende zu erwartende Druckverläufe umgesetzt werden. Allein die Abweichung des Druckverlaufs am Sensor 6, 6' von dem vorgesehenen Sollwert kann dabei als Fehlerbedingung ausgewertet werden, ohne daß die übrigen Bauelemente separat ausgewertet werden müssten.

Außerdem ist über den ermittelten Druck in dem jeweiligen Arbeitsraum in bestimmten Fällen der Fahrzustand des Fahrzeugs zu erkennen. So zeigt beispielsweise ein hoher Druck eine hohe Lenkkraft an. Wenn dieser hohen Lenkkraft keine entsprechende Änderung des Lenk-Istwinkels (des Radwinkels) gegenübersteht, kann die Regelanordnung 20 dieses als eine Blockierung der Schwenkbewegung der Räder werten, beispielsweise weil ein Rad an einem Bordstein anstößt.

Im Fahrbetrieb kann diese Servolenkung ansonsten wie aus dem erwähnten Stand der Technik bekannt betrieben werden. Insbesondere kann bei einem in einem der Hydraulikkreise erkannten Fehler automatisch auf den jeweils anderen Hydraulikkreis umgeschaltete werden und dadurch die für die Fahrsicherheit erforderliche Redundanz gewährleistet werden.

Die präzisere Rückmeldung der Lenkkraft, die aus dem Druck zu ermitteln ist, kann auch als Rückstellkraft an den Fahrer übermittelt werden. Die höhere Präzision verbessert hierbei das Gefühl des Fahrers für den Fahrbahnzustand, insbesondere bei Glätte.

Die verschiedenen, hier nur ansatzweise geschilderten Auswertungsmöglichkeiten werden dadurch eröffnet, dass der Druckverlauf in den Arbeitsräumen 2 und 2' aufgrund der unmittelbaren Zuordnung der Drucksensoren 6 und 6' besonders präzise messbar ist.

## Patentansprüche

1. Hydraulische Servolenkung für nicht spurgebundene Fahrzeuge, insbesondere Kraftfahrzeuge, mit
- einer fahrerseitig betätigten Lenkhandhabe, z. B. einem Lenkhandrad,
- einem mit gelenkten Fahrzeugrädern zu deren Lenkverstellung zwangsgekoppelten, doppelt wirkenden, ein Gehäuse und zwei Arbeitsräume aufweisenden hydraulischen Stellmotor (1) bzw. Lenkaktuator,
- einer motorisch, insbesondere elektrisch betätigten Steuerventilanordnung (7, 7'), welche über einen Druckanschluss mit der Druckseite einer Hydraulikpumpe, über einen Niederdruckanschluss mit der Saugseite der Hydraulikpumpe oder einem mit der Saugseite kommunizierenden Hydraulikreservoir und über zwei Hydraulikleitungen (4, 4') mit den beiden Seiten des Stellmotors verbunden ist und eine Druckdifferenz zwischen den Hydraulikleitungen (4, 4') bezüglich Maß und Richtung zu steuern gestattet, und
- einer elektronischen Regelanordnung (20), welche einen von der Lenkhandhabe betätigten Lenkwinkel-Sollwertgeber sowie einen mit den gelenkten Fahrzeugrädern betätigten Lenkwinkel-Istwertgeber aufweist und das Servoventil (7, 7') in Abhängigkeit von einem Soll-Istwert-Vergleich regelt,
- einem ersten Hydraulikkreis (15), einem zweiten Hydraulikkreis (15') und einer Wechselventilanordnung (5), wobei mittels der Wechselventilanordnung (5) ein Umschalten von dem einen der Hydraulikkreise (15, 15') auf den jeweils anderen der Hydraulikkreise (15, 15') erfolgen kann,
**dadurch gekennzeichnet,**
**dass** Drucksensoren (6, 6') derart angeordnet sind, dass sie ohne dazwischenliegende Ventile mit jeweils einem Arbeitsraum (2 bzw. 2') hydraulisch kommunizieren.

2. Servolenkung nach Anspruch 1, **dadurch gekennzeichnet, dass** die Drucksensoren (6, 6') mit dem Gehäuse verschraubt sind.

3. Servolenkung nach einem der vorhergehenden Ansprüche, **dadurch gekennzeichnet, dass** die Drucksensoren (6, 6') in der Weise mit dem Gehäuse verbunden sind, dass über einen in dem Gehäuse vorgesehenen Sensorkanal der Druck in wenigstens einem Kanal, insbesondere in den Hydraulikleitungen (4, 4') überwachbar ist.

4. Servolenkung nach einem der vorhergehenden Ansprüche, **dadurch gekennzeichnet, dass** zwischen den Drucksensoren (6, 6') und dem jeweiligen Arbeitsraum (2 bzw. 2') ein in das Gehäuse integrierter Sensorkanal vorgesehen ist.

5. Servolenkung nach einem der vorhergehenden Ansprüche, **dadurch gekennzeichnet, dass** die Regelanordnung dazu eingerichtet ist, einen zeitlichen Verlauf des Drucks an den Drucksensoren (6, 6') auszuwerten und Abweichungen des Verlaufs von einem Sollverlauf als ein Fehlersignal zu werten, nach dessen Auftreten vorgesehen ist, die Wechselventilanordnung (5) umzuschalten.

6. Servolenkung nach einem der vorhergehenden Ansprüche, **dadurch gekennzeichnet, dass** jedem der Arbeitsräume (2, 2') des Stellmotors (3) nur ein Drucksensor (6, 6') zugeordnet ist.

## Claims

1. Hydraulic servo steering system for vehicles, in particular motor vehicles, which are not track-bound, said system having:
- a steering handle, for example a steering wheel, actuated by the driver;
- a double-acting hydraulic servomotor (1) or steering actuator which is positively coupled to steered vehicle wheels for the steering adjustment thereof and has a housing and two working spaces;
- a motor-actuated, in particular electrically actuated, control-valve arrangement (7, 7') which is connected via a pressure connection to the pressure side of a hydraulic pump, via a low-pressure connection to the suction side of said hydraulic pump or a hydraulic reservoir communicating with said suction side, and via two hydraulic lines (4, 4') to both sides of the servomotor, and which makes it possible to control a pressure difference between the hydraulic lines (4, 4') with respect to size and direction; and
- an electronic regulating arrangement (20) which has a steering-angle ideal-value transmitter actuated by the steering handle and also a steering-angle actual-value transmitter actuated by means of the steered vehicle wheels, and which regulates the servo valve (7, 7') in dependence upon an ideal-value/actual value comparison;
- a first hydraulic circuit (15), a second hydraulic circuit (15') and a changeover-valve arrangement (5), wherein switching-over from one of the hydraulic circuits (15, 15') to the other hydraulic circuit (15, 15') in each case can take place by means of said changeover-valve arrangement (5);
**characterised in that**
pressure-sensors (6, 6') are arranged in such a way that they communicate hydraulically, without any intervening valves, with one working space (2 and 2' respectively) in each case.

2. Servo steering system according to claim 1, **characterised in that** the pressure-sensors (6, 6') are screwed to the housing.

3. Servo steering system according to one of the preceding claims, **characterised in that** the pressure-sensors (6, 6') are connected to the housing in such a way that the pressure in at least one conduit, particularly in the hydraulic lines (4. 4'), can be monitored via a sensor conduit provided in the housing.

4. Servo steering system according to one of the preceding claims, **characterised in that** a sensor conduit which is integrated into the housing is provided between the pressure-sensors (6, 6') and the respective working space (2 and 2' respectively).

5. Servo steering system according to one of the preceding claims, **characterised in that** the regulating arrangement is set up for the purpose of evaluating a time slope of the pressure at the pressure-sensors (6, 6') and classifying deviations of the slope from an ideal slope as an error signal, after the occurrence of which provision is made for switching over the changeover-valve arrangement (5).

6. Servo steering system according to one of the preceding claims, **characterised in that** only one pressure-sensor (6, 6') is associated with each of the working spaces (2, 2') of the servomotor (3).

## Revendications

1. Direction assistée hydraulique pour véhicules non assujettis à une voie, en particulier des véhicules automobiles, comprenant :
- un moyen de manipulation actionné par le conducteur, par exemple un volant de direction,
- un servomoteur hydraulique (1) ou actionneur de direction comprenant un boîtier et deux chambres de travail, à double effet, couplé à force aux roues dirigées du véhicule en vue de leur déplacement en direction,
- un agencement à vanne de commande (7, 7') motorisé, en particulier à actionnement électrique, qui est relié via un raccord de pression avec le côté pression d'une pompe hydraulique, via un raccord à basse pression avec le côté aspiration de la pompe hydraulique ou avec un réservoir hydraulique qui communique avec le côté aspiration, et via deux conduits hydrauliques (4, 4') avec les deux côtés du servomoteur, et qui permet de commande une différence de pression entre les conduites hydrauliques (4, 4') quant à son amplitude et à sa direction, et
- un agencement de régulation électronique (20) qui comprend un émetteur de valeur de consigne d'angle de direction actionné par le moyen de manipulation et un émetteur de valeur réelle d'angle de direction actionné par les roues dirigées du véhicule, et qui régule la vanne de commande (7, 7') en fonction d'une comparaison valeur de consigne/valeur réelle,
- un premier circuit hydraulique (15), un second circuit hydraulique (15'), et un agencement de vanne inverseuse (5), de telle sorte qu'au moyen de l'agencement de vanne inverseuse (5) peut s'effectuer une inversion depuis l'un des circuits hydrauliques (15, 15') vers l'autre circuit hydraulique respectif (15, 15'),
**caractérisée en ce que**
des capteurs de pression (6, 6') sont agencés de telle manière qu'ils communiquent sur le plan hydraulique avec une chambre de travail respective (2, respectivement 2') sans vannes interposées.

2. Direction assistée selon la revendication 1, **caractérisée en ce que** les capteurs de pression (6, 6') sont vissés sur le boîtier.

3. Direction assistée selon l'une des revendications précédentes, **caractérisée en ce que** les capteurs de pression (6, 6') sont reliés au boîtier de telle manière que, par l'intermédiaire d'un canal de détection prévu dans le boîtier, la pression dans au moins un canal, en particulier dans les conduites hydrauliques (4, 4'), peut être surveillée.

4. Direction assistée selon l'une des revendications précédentes, **caractérisée en ce que**, entre les capteurs de pression (6, 6') et la chambre de travail respective (2, respectivement 2'), il est prévu un canal de détection intégré dans le boîtier.

5. Direction assistée selon l'une des revendications précédentes, **caractérisée en ce que** l'agencement de régulation est réalisé de manière à analyser une évolution temporelle de la pression au niveau des capteurs de pression (6, 6') et d'évaluer des écarts de l'évolution par rapport à une évolution de consigne comme étant un signal d'erreur, après l'apparition duquel il est prévu d'inverser l'agencement de vanne inverseuse (5).

6. Direction assistée selon l'une des revendications précédentes, **caractérisée en ce qu'**un seul capteur de pression (6, 6') est associé à chacune des chambres de travail (2, 2') du servomoteur (3).
